# EUROPÄISCHE PATENTSCHRIFT

(11) **EP 1 597 112 B1**
(45) Veröffentlichungstag und Bekanntmachung des Hinweises auf die Patenterteilung: **20.06.2007**
(21) Anmeldenummer: 04713455.6
(22) Anmeldetag: 21.02.2004
(51) Int. Cl.: B60R 1/12

(54) **AUSSENRÜCKBLICKSPIEGEL FÜR KRAFTFAHRZEUGE**
EXTERIOR REARVIEW MIRROR FOR MOTOR VEHICLES
RETROVISEUR EXTERIEUR POUR VEHICULES AUTOMOBILES

(30) Priorität: 26.02.2003 DE 10308073
(43) Veröffentlichungstag der Anmeldung: 23.11.2005
(73) Patentinhaber: Schefenacker Vision Systems Germany GmbH & Co. KG, 73730 Esslingen (DE)
(72) Erfinder: OEHMANN, Roland, 70188 Stuttgart (DE)
(74) Vertreter: Jackisch-Kohl, Anna-Katharina
(86) Internationale Anmeldenummer: PCT/DE2004/000328
(87) Internationale Veröffentlichungsnummer: WO 2004/076236

(56) Entgegenhaltungen:
- EP-B- 0 738 627
- WO-A-00/55009
- WO-A-01/28815
- WO-A-01/59734
- FR-A- 2 821 308

## Beschreibung

Die Erfindung betrifft einen Außenrückblickspiegel für Fahrzeuge, vorzugsweise für Kraftfahrzeuge, nach dem Oberbegriff des Anspruches 1.

Es ist bekannt (WO 00/55009 A), eine gattungsgemäße Leuchtmitteleinheit im Spiegelfuß als Wiederholblinkleuchte oder als Umfeldleuchte einzusetzen. Die Montage der Leuchtmitteleinheit innerhalb des Außenrückblickspiegels ist aufwendig. Muß die Leuchtmitteleinheit gewechselt werden, müssen die entsprechenden Steckerkontakte gelöst und zusammengeführt werden, was innerhalb des Außenrückblickspiegels umständlich und schwierig ist.

Es ist auch ein Außenrückblickspiegel bekannt (FR 2 821 308 A), bei dem eine kreisringförmige Leuchtmitteleinheit auf einen zapfenförmigen Ansatz des Spiegelfußes gesteckt wird.

Der Erfindung liegt die Aufgabe zugrunde, den gattungsgemäßen Außenrückblickspiegel so auszubilden, daß die Leuchtmitteleinheit bei geringem Einbauraum einfach montiert werden kann.

Diese Aufgabe wird beim gattungsgemäßen Außenrückblickspiegel erfindungsgemäß mit den kennzeichnenden Merkmalen des Anspruches 1 gelöst.

Beim erfindungsgemäßen Außenrückblickspiegel ist die Leuchtmitteleinheit Teil des Anbauelementes, das vom Außenrückblickspiegel körperlich getrennt ist. Die Leuchtmitteleinheit und das Leuchtmittel können darum einfach hergestellt und montiert werden. Innerhalb des Außenrückblickspiegels wird kein Einbauraum benötigt. Da die Leuchtmitteleinheit Bestandteil des Anbauelementes ist, ist auch ein einfacher Austausch der Leuchtmitteleinheit bzw. des Anbauelementes möglich. Das Gehäuse der Leuchtmitteleinheit ist im Aufnahmeraum des Spiegelfußes aufgenommen. Der Aufnahmeraum wird durch eine Vertiefung im Spiegelfuß gebildet, in die das Gehäuse einfach eingesetzt werden kann. Die Wand des Anbauelementes befindet sich zwischen dem Spiegelfuß und der Karosserie des Fahrzeuges. Dadurch kann zunächst das Anbauelement mit der Leuchtmitteleinheit an der Karosserie des Fahrzeuges montiert werden, bevor anschließend derAußenrückblickspiegel am Fahrzeug montiert wird. Da die Leuchtmitteleinheit nicht im Spiegelkopf und auch nicht im Spiegelfuß des Außenrückblickspiegels sitzt, ist die Leuchtmitteleinheit für die Montage leicht zugänglich.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig.1: in explosiver Darstellung sowie teilweise im Schnitt eine erste Ausführungsform eines erfindungsgemäßen Außenrückblickspiegels,
- Fig. 2: teilweise im Schnitt eine Ansicht in Richtung des Pfeiles II in Fig. 1,
- Fig. 3: in einer Darstellung entsprechend Fig. 1 eine zweite Ausführungsform eines erfindungsgemäßen Außenrückblickspiegels,
- Fig. 4: in Seitenansicht und teilweise im Schnitt eine dritte Ausführungsform eines erfindungsgemäßen Außenrückblickspiegels,
- Fig. 5: in Draufsicht und teilweise in explosiver Darstellung den Außenrückblickspiegel gemäß Fig. 4,
- Fig. 6 und Fig. 7: in Darstellungen entsprechend den Fig. 4 und 5 eine vierte Ausführungsform eines erfindungsgemäßen Außenrückblickspiegels..

Die im folgenden beschriebenen Außenrückblickspiegel sind für Kraftfahrzeuge vorgesehen und haben jeweils wenigstens eine Beleuchtung, die in unterschiedlicher Weise angeordnet und ausgebildet sein kann, um unterschiedliche Leuchtfunktionen zu erfüllen.

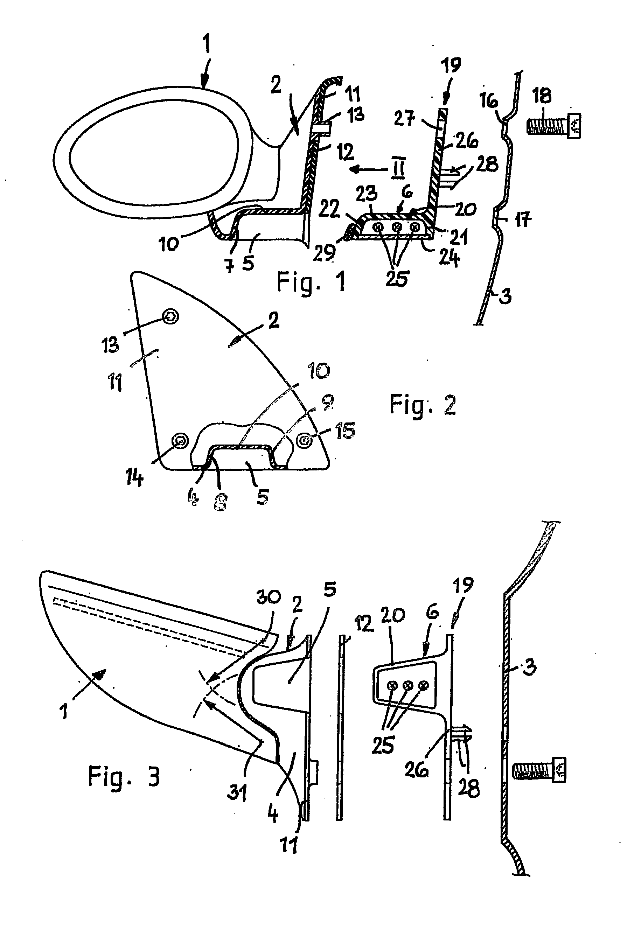

Der Außenrückblickspiegel gemäß den Fig. 1 und 2 hat einen Spiegelkopf 1 und einen Spiegelfuß 2, mit dem der Außenrückblickspiegel am Kraftfahrzeug befestigt werden kann. In Fig. 1 ist beispielhaft ein Teil des Türbleches 3 des Kraftfahrzeuges dargestellt. Der Spiegelfuß 2 kann am Türblech 3 in bekannter Weise befestigt werden, beispielsweise durch Einrasten, Einhängen, Verschrauben oder durch andere bekannte Befestigungsmöglichkeiten. Der Spiegelkopf 1 ist gegenüber dem Spiegelfuß 2 abklappbar, vorzugsweise in Fahrtrichtung nach hinten und nach vorn. Der Außenrückblickspiegel nach den Fig. 1 und 2 ist als Einachsspiegel ausgebildet, bei dem der Spiegelkopf 1 beim Abklappen nach vorn und nach hinten jeweils um die gleiche aufrechte Achse schwenkt. Da solche Schwenkausbildungen bei Außenrückblickspiegeln bekannt sind, werden sie nicht näher erläutert.

Der Spiegelfuß 2 weist an seiner dem Boden zugewandten Unterseite 4 einen Aufnahmeraum 5 auf, in dem eine Leuchtmitteleinheit 6 untergebracht wird. Zur Bildung des Aufnahmeraumes 5 ist die Unterseite 4 des Spiegelfußes entsprechend verformt (Fig. 2). Der Aufnahmeraum 5 liegt etwa in halber Breite des Spiegelfußes 2 und ist nach außen durch eine Rückwand 7 und in Fahrtrichtung nach vorn und hinten durch Seitenwände 8, 9 begrenzt.

Nach oben wird der Aufnahmeraum 5 durch eine Decke 10 begrenzt, die in eine aufwärts gerichtete Anlagewand 11 des Spiegelfußes 2 übergeht (Fig. 1). Die Anlagewand 11 ist vorteilhaft mit einer Dichtung 12 belegt. Wie sich aus den Fig. 1 und 2 ergibt, sind in der Anlagewand 11, die im Ausführungsbeispiel etwa dreieckförmigen Umriß hat, drei Hülsen 13 bis 15 vorgesehen, die über die Anlagewand 11 vorstehen, die Dichtung 12 durchsetzen und in der Einbaulage in Öffnungen 16, 17 im Türblech 3 eingreifen. Die Hülsen 13 bis 15 wirken mit Gewindebolzen 18 zusammen, mit denen der Außenrückblickspiegel am Türblech 3 befestigt wird.

Die Leuchtmitteleinheit 6 ist Bestandteil eines Anbauelementes 19, das in der Einbaulage des Außenrückblickspiegels zwischen dem Türblech 3 und dem Spiegelfuß 2 angeordnet ist. Das Anbauelement 19 hat ein Gehäuse 20, dessen Umrißform der Innenform des Aufnahmeraumes 5 des Spiegelfußes 2 angepaßt ist. Das Gehäuse 20 hat eine Rückwand 21, eine Vorderwand 22, (nicht dargestellte) Seitenwände sowie eine Oberwand 23. Mit diesen Wänden liegt das Gehäuse 20 in der Einbaulage an der Rückwand 7, den Seitenwänden 8, 9 und der Decke 10 des Aufnahmeraumes 5 an. Das Gehäuse 20 ist nach unten in Richtung auf den Boden durch eine Lichtscheibe 24 geschlossen, durch die das von Leuchtmitteln 25 im Gehäuse 20 ausgestrahlte Licht nach unten in Richtung auf den Boden fällt. Die im Gehäuse 20 untergebrachten Leuchtmittel 25 sind vorzugsweise LEDs, können aber auch Glühlampen oder andere, in der Kraftfahrzeugtechnik bekannte Leuchtmittel sein. Die Lichtscheibe 24 ist im Ausführungsbeispiel eben und liegt in der Einbaulage bündig zur Unterseite 4 des Spiegelfußes 2. Die Lichtscheibe 24 kann beispielsweise entsprechend der Designvorgabe auch dem Spiegelfuß 2 entsprechend gewölbt sein.

An das Gehäuse 20 schließt aufwärts eine Rückwand 26 an, die in Verlängerung der Rückwand 21 des Gehäuses 20 liegt und in der Einbaulage an der Dichtung 12 flächig anliegt. Die Rückwand 26 hat Öffnungen 27 für den Durchtritt der Hülsen 13 bis 15 und für Kabel. Die Rückwand 26 ist etwa an die Umrißform der Dichtung 12 angepaßt. Von der Rückwand 26 stehen Rasthaken 28 ab, denen im Türblech 3 eine entsprechende (nicht dargestellte) Rastöffnung zugeordnet ist.

Die Leuchtmitteleinheit 6 des Anbauelementes 19 bildet eine Umfeldbeleuchtung, die unabhängig vom Außenrückblickspiegel mittels der Rasthaken 28 am Türblech 3 des Kraftfahrzeuges befestigt werden kann. Es ist abweichend vom dargestellten Ausführungsbeispiel auch möglich, das Anbauelement 19 am Türblech 3 einzuhängen, zu verschrauben oder auf andere Weise zu befestigen. Es ist ferner möglich, das Anbauelement 19 am Spiegelfuß 2 zu befestigen. Da die Leuchtmitteleinheit 6 Teil des Anbauelementes 19 ist, muß die Leuchtmitteleinheit nicht in den Spiegelfuß 2 integriert werden.

Im dargestellten Ausführungsbeispiel wird zunächst das Anbauelement 19 am Türblech 3 befestigt. Anschließend wird der Spiegelfuß 2 einschließlich Spiegelkopf 1 am Türblech 3 mit den Gewindebolzen 18 in bekannter Weise angeschraubt. Die Rückwand 26 des Anbauelementes 19 wird vom Spiegelfuß 2 überdeckt, während die Leuchtmitteleinheit 6 im Aufnahmeraum 5 des Spiegelfußes 2 untergebracht wird. Durch den Spiegelfuß 2 wird das Anbauelement 19 sicher gehalten. Mit dem von den Leuchtmitteln 25 nach unten abgestrahlten Licht wird der Bereich neben der Kraftfahrzeugtür beleuchtet, so daß dieser Bereich, wenn das Fahrzeug bei Dunkelheit bestiegen werden soll, optimal ausgeleuchtet wird.

Das Anbauelement 19 ist bis auf die Lichtscheibe 24 einstückig ausgebildet und besteht vorteilhaft aus einem Kunststoff. An der Außenseite der Vorderwand 22 sowie auch an den (nicht dargestellten) Seitenwänden des Gehäuses 20 des Anbauelementes 19 ist eine Dichtung 29 vorgesehen, die ein Eindringen von Schmutz in den Aufnahmeraum 5 verhindert.

Fig. 3 zeigt einen Außenrückblickspiegel in Zweiachs-Ausführung. Der Spiegelkopf 1 ist in und entgegen Fahrtrichtung des Kraftfahrzeuges um jeweils eine Achse 30, 31 schwenkbar. Die beiden Schwenkachsen liegen parallel zueinander und erstrecken sich wie die Schwenkachse des Außenrückblickspiegels nach den Fig. 1 und 2 aufwärts. Solche Zweiachsspiegel sind bekannt und werden darum auch nicht näher erläutert.

Der Spiegelfuß 2 ist wie bei der vorigen Ausführungsform an seiner Unterseite mit dem Aufnahmeraum 5 versehen, der die Leuchtmitteleinheit 6 des Anbauelementes 19 aufnimmt. Im Unterschied zum vorigen Ausführungsbeispiel liegt der Aufnahmeraum 5 nicht mittig in der Unterseite 4, sondern ist in Fahrtrichtung nach hinten versetzt in der Unterseite 4 vorgesehen. Der Aufnahmeraum 5 ist im übrigen im wesentlichen gleich ausgebildet wie bei der vorigen Ausführungsform. Selbstverständlich kann der Aufnahmeraum 5 auch bei einem Zweiachsspiegel mittig in der Unterseite 4 des Spiegelfußes 2 vorgesehen sein.

Die dem Türblech 3 zugewandte Seite der Anlagewand 11 des Spiegelfußes 2 wird mit der Dichtung 12 belegt, die als flache Dichtscheibe ausgebildet ist und an der Anlagewand 11 befestigt werden kann. Es ist aber auch möglich, die Dichtung 12 zwischen der Anlagewand 11 des Spiegelfußes 2 und der Rückwand 26 des Anbauelementes 19 einzuklemmen.

Die Rückwand 26 ist einstückig mit dem Gehäuse 20 der Leuchtmitteleinheit 6 ausgebildet, in dem die Leuchtmittel 25 untergebracht sind. In der Einbaulage strahlen die Leuchtmittel 25 das Licht nach unten auf den Boden ab.

Von der Rückwand 26 des Anbauelementes 19 stehen die Rasthaken 28 ab, mit denen das Anbauelement 19 am Türblech 3 verrastet werden kann.

Auch bei diesem Ausführungsbeispiel ist das Anbauelement 19 ein formstabiles, aber teilweise elastisches Bauteil, das als eigenständige Baueinheit zwischen dem Spiegelfuß 2 und dem Türblech 3 angeordnet wird. Das Anbauelement 19 bildet entsprechend der vorigen Ausführungsform eine Art Adapterstück zwischen dem Spiegelfuß 2 und der Fahrzeugtür 3.

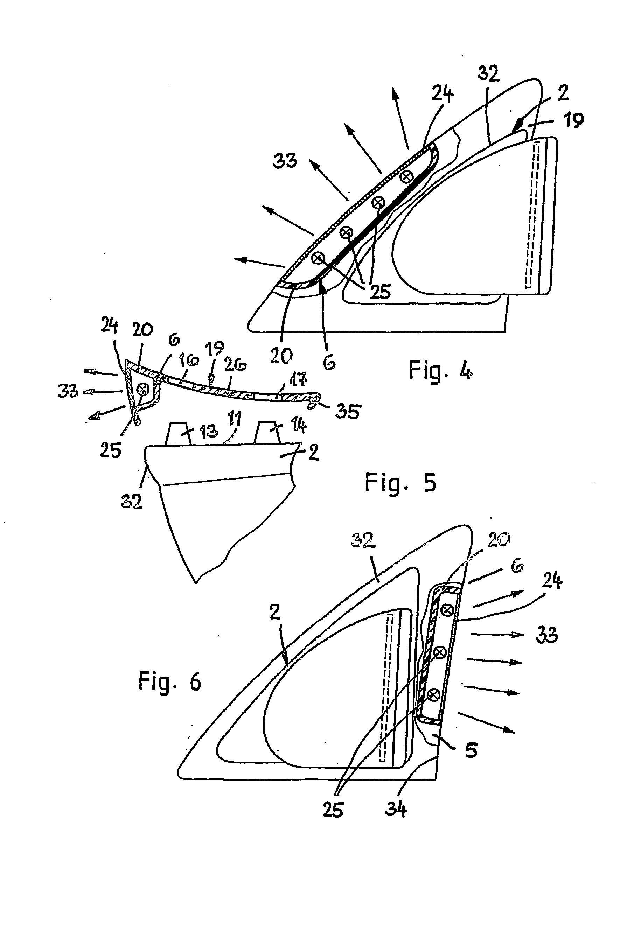

Die Fig. 4 und 5 zeigen eine Ausführungsform, bei der das Anbauelement 19 ein separates Bauteil ist, das zwischen dem Spiegelfuß 2 und dem Türblech 3 eingebaut wird. Das Anbauelement 19 steht über seinen Umfang über den Spiegelfuß 2 vor (Fig. 4). Die Leuchtmitteleinheit 6 des Anbauelementes ist benachbart zu dem in Fahrtrichtung vorn liegenden, schräg aufwärts gerichteten Rand 32 des Spiegelfußes 2 angeordnet. Die Leuchtmitteleinheit 6 hat das Gehäuse 20, in dem die Leuchtmittel 25 untergebracht sind. Die Leuchtmittel 25 sind innerhalb des Gehäuses 20 benachbart zum Rand 32 des Spiegelfußes 2 angeordnet. Das Gehäuse 20 ist in Fahrtrichtung nach vorn durch die Lichtscheibe 24 geschlossen, die bündig in der Außenseite des Anbauelementes 19 liegt. Im Querschnitt (Fig. 5) ist die Lichtscheibe 24 konvex gekrümmt. Je nach Gestaltung des Anbauelementes 19 kann die Lichtscheibe 24 selbstverständlich auch jede andere geeignete Querschnittsform haben.

Das Anbauelement 19 hat in Ansicht Dreieckform. Seine Ränder liegen etwa parallel zu den Rändern des Spiegelfußes 2. Das Anbauelement 19 kann vollständig aus weichem, gummiartigem Material bestehen. Selbstverständlich ist auch eine Ausführung dieses Anbauelementes 19 in einer Kombination aus weichem und hartem, formstabilen Kunststoff denkbar.

Das von den Leuchtmitteln 25 ausgesandte Licht tritt durch die Lichtscheibe 24 in Fahrtrichtung nach vorn heraus. In dieser Ausgestaltung bildet die Leuchtmitteleinheit 6 eine Wiederholblinkleuchte.

Das Gehäuse 20 ist einstückig mit der Rückwand 26 des Anbauelementes 19 ausgebildet. Sie liegt in der Einbaulage flächig an der Anlagewand 11 des Spiegelfußes 2 an. Er weist die über die Anlagewand 11 vorstehenden Hülsen 13, 14 auf, die durch die Öffnungen 16, 17 in der Rückwand 26 des Anbauelementes 19 ragen und die mit den Gewindebolzen 18 (Fig. 1) bei der Montage des Außenrückblickspiegels zusammenwirken.

Durch eine geeignete Optikgestaltung der Lichtscheibe 24 bzw. der Leuchtmitteleinheit 6 können die Lichtstrahlen 33 der Leuchtmittel 25 so gelenkt werden, daß sie schräg nach unten zum Boden gerichtet sind. In diesem Falle bildet die Leuchtmitteleinheit 6 des Anbauelementes 19 keine Wiederholblinkleuchte, sondern eine Umfeldleuchte, die den Bodenbereich neben der Fahrzeugtür beleuchtet.

Es ist auch möglich, nur einen Teil der Leuchtmittel 25 für die Umfeldleuchte heranzuziehen. Dann kann die Leuchtmitteleinheit 6 als Wiederholblinkleuchte und als Umfeldleuchte eingesetzt werden. In diesem Falle ist es vorteilhaft, die Leuchtmittel der Umfeldleuchte unabhängig von den Leuchtmitteln der Wiederholblinkleuchte betätigen zu können.

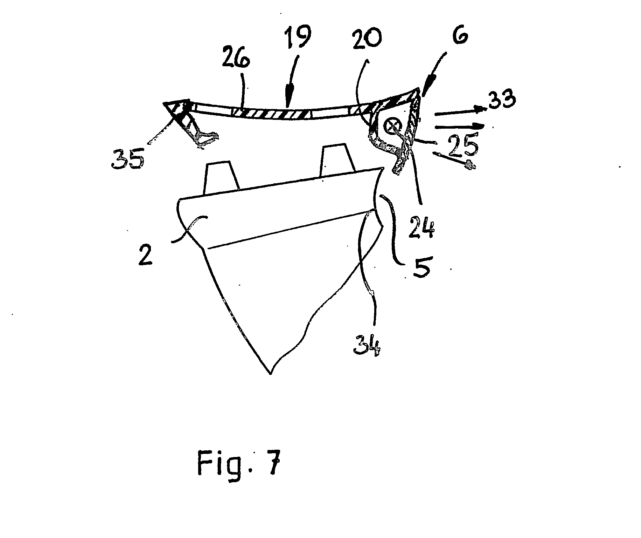

Bei der Ausführungsform nach den Fig. 6 und 7 befindet sich die Leuchtmitteleinheit 6 des Anbauelementes 19 an dem in Fahrtrichtung hinten liegenden, aufwärts gerichteten Rand 34 des Spiegelfußes 2. Der Rand 34 ist mit dem als Vertiefung ausgebildeten Aufnahmeraum 5 versehen, in dem die Leuchtmitteleinheit 6 in der Einbaulage liegt. Das Gehäuse 20 der Leuchtmitteleinheit 6 liegt an den Wandungen des Aufnahmeraumes 5 flächig an. Die Lichtscheibe 24 liegt bündig in der Außenseite des Randes 34 des Spiegelfußes 2.

Im Gehäuse 20 sind die Leuchtmittel 25 untergebracht, die ihr Licht im Unterschied zur vorigen Ausführungsform in Fahrtrichtung nach hinten abstrahlen. Die Leuchtmitteleinheit 6 kann auch in diesem Falle als Wiederholblinkleuchte eingesetzt werden. Durch eine entsprechende Optikgestaltung der Leuchtmitteleinheit 6 ist es möglich, die Lichtstrahlen 33 entgegen Fahrtrichtung des Kraftfahrzeuges nach unten zu lenken, so daß die Leuchtmitteleinheit 6 als Umfeldleuchte dient. Wie beim vorigen Ausführungsbeispiel können die Lichtstrahlen 33 beispielsweise durch Optiken auf der Rückseite der Lichtscheibe 24 und/oder durch im Gehäuse 20 untergebrachte Reflektoren in der gewünschten Richtung gelenkt werden. Es ist ferner möglich, nur einen Teil der Leuchtmittel 25 für die Umfeldbeleuchtung heranzuziehen, während der restliche Teil der Leuchtmittel 25 für die Wiederholblinkleuchte eingesetzt werden kann. Entsprechend dem vorigen Ausführungsbeispiel ist es in einem solchen Fall zweckmäßig, die für die Umfeldbeleuchtung vorgesehenen Leuchtmittel 25 unabhängig von den übrigen Leuchtmitteln ein- und auszuschalten.

An das Gehäuse 20 schließt die Rückwand 26 an, die vorteilhaft einstückig mit dem Gehäuse ausgebildet ist und in der Einbaulage flächig an der Anlagewand 11 des Spiegelfußes 2 anliegt. Während bei der Ausführungsform nach den Fig. 4 und 5 das Gehäuse 20 an dem in Fahrtrichtung vorderen Rand der Rückwand 26 vorgesehen ist, befindet sich das Gehäuse 20 bei der Ausführungsform nach den Fig. 6 und 7 an dem in Fahrtrichtung des Fahrzeuges rückwärtigen Rand der Rückwand 26. An dem dem Gehäuse 20 gegenüberliegenden Rand ist die Rückwand 26 spitzwinklig abgewinkelt. Dieser abgewinkelte Rand 35 der Rückwand 26 berührt den in Fahrtrichtung vorderen, aufwärts gerichteten Rand 32 des Spiegelfußes 2.

Bei sämtlichen Ausführungsformen ist die Leuchtmitteleinheit 6 Bestandteil des separaten Anbauelementes 19, das zwischen dem Spiegelfuß 2 und der Fahrzeugtür angeordnet wird. Das Anbauelement 19 mit der Leuchtmitteleinheit 6 ist vorteilhaft einstückig ausgebildet. Das Anbauelement 19 kann aus einem harten Werkstoff, vorzugsweise einem entsprechenden Kunststoff, bestehen. Es ist auch möglich, das Anbauelement 19 aus flexiblem Material herzustellen, so daß es gleichzeitig auch eine Dichtungsfunktion zwischen dem Außenrückblickspiegel bzw. dessen Spiegelfuß 2 und dem Türblech 3 erfüllen kann. Es ist ferner möglich, das Anbauelement 19 teilweise aus einem harten Werkstoff und teilweise aus einem flexiblen Material herzustellen. So ist es beispielsweise möglich, das Gehäuse 20 der Leuchtmitteleinheit 6 aus einem entsprechend festen Werkstoff herzustellen, während die Rückwand 26 aus flexiblem Material bestehen kann.

Da das Anbauelement 19 ein vom Spiegelfuß getrenntes Bauteil ist, steht der Innenraum des Spiegelfußes 2 und insbesondere des Spiegelkopfes 1 für andere Einbauten zur Verfügung. So können in den Spiegelkopf 1 problemlos die Antriebe zur Spiegelglasverstellung und zur motorischen Verstellung des Spiegelkopfes 1, Heizelemente für das Spiegelglas, Sender von Garagentoröffnern, Lautsprecher, Antennen, GPS-Module und dergleichen eingebaut werden.

## Patentansprüche

1. Außenrückblickspiegel für Fahrzeuge, vorzugsweise für Kraftfahrzeuge, mit einem Spiegelfuß (2) und einem Spiegelkopf (1) sowie wenigstens einer Leuchtmitteleinheit (6), die wenigstens ein Leuchtmittel (25) und ein Gehäuse (20) aufweist, in dem das Leuchtmittel (25) untergebracht ist und das in einem Aufnahmeraum des Spiegelfußes (2) liegt,
**dadurch gekennzeichnet, daß** der Aufnahmeraum (5) eine Vertiefung im Spiegelfuß (2) ist, in die das Gehäuse (20) ragt, und daß die Leuchtmitteleinheit (6) Teil eines von Außenrückblickspiegel körperlich getrennten Anbauelementes (19) ist, das eine Wand (26) aufweist, die zwischen dem Spiegelfuß (2) und der Karosserie (3) des Fahrzeuges liegt.

2. Außenrückblickspiegel nach Anspruch 1,
**dadurch gekennzeichnet, daß** das Gehäuse (20) und die Wand (26) des Anbauelementes (19) einstückig miteinander ausgebildet sind.

3. Außenrückblickspiegel nach Anspruch 1 oder 2,
**dadurch gekennzeichnet, daß** das Anbauelement (19) wenigstens einen Formschlußteil (28, 35) aufweist.

4. Außenrückblickspiegel nach Anspruch 3,
**dadurch gekennzeichnet, daß** der Formschlußteil (28) durch Rasthaken gebildet ist.

5. Außenrückblickspiegel nach Anspruch 4,
**dadurch gekennzeichnet, daß** der Formschlußteil (28) in die Karosserie (3) des Fahrzeuges einrastbar ist.

6. Außenrückblickspiegel nach einem der Ansprüche 3 bis 5,
**dadurch gekennzeichnet, daß** der Formschlußteil (28, 35) von der Wand (26) des Anbauelementes (19) quer absteht.

7. Außenrückblickspiegel nach Anspruch 3 oder 6,
**dadurch gekennzeichnet, daß** der Formschlußteil (35) ein abgewinkelter Teil der Wand (26) des Anbauelementes (19) ist.

8. Außenrückblickspiegel nach einem der Ansprüche 1 bis 7,
**dadurch gekennzeichnet, daß** der Aufnahmeraum (5) durch einen geformten Abschnitt des Spiegelfußes (2) gebildet ist.

9. Außenrückblickspiegel nach einem der Ansprüche 1 bis 8,
**dadurch gekennzeichnet, daß** der Aufnahmeraum (5) an der Unterseite (4) des Spiegelfußes (2) vorgesehen ist.

10. Außenrückblickspiegel nach einem der Ansprüche 1 bis 8,
**dadurch gekennzeichnet, daß** der Aufnahmeraum (5) am vorderen und/oder rückwärtigen, aufwärts gerichteten Rand (32, 34) des Spiegelfußes (2) vorgesehen ist.

11. Außenrückblickspiegel nach einem der Ansprüche 1 bis 10,
**dadurch gekennzeichnet, daß** das Gehäuse (20) der Leuchtmitteleinheit (6) an der Wandung des Aufnahmeraumes (5) anliegt.

12. Außenrückblickspiegel nach einem der Ansprüche 1 bis 11,
**dadurch gekennzeichnet, daß** das Gehäuse (20) durch eine Lichtscheibe (24) geschlossen ist.

13. Außenrückblickspiegel nach einem der Ansprüche 1 bis 12,
**dadurch gekennzeichnet, daß** die Leuchtmitteleinheit (6) als Umfeldleuchte vorgesehen ist.

14. Außenrückblickspiegel nach einem der Ansprüche 1 bis 12,
**dadurch gekennzeichnet, daß** die Leuchtmitteleinheit (6) als Wiederholblinkleuchte ausgebildet ist.

15. Außenrückblickspiegel nach einem der Ansprüche 1 bis 14,
**dadurch gekennzeichnet, daß** das Anbauelement (19) Durchtrittsöffnungen (16, 17) für Befestigungsteile (13 bis 15) des Spiegelfußes (2), gegebenenfalls auch für Kabel, aufweist.

16. Außenrückblickspiegel nach einem der Ansprüche 1 bis 15,
**dadurch gekennzeichnet, daß** das Anbauelement (19) formstabil ist.

17. Außenrückblickspiegel nach einem der Ansprüche 1 bis 15,
**dadurch gekennzeichnet, daß** das Anbauelement (19) teilweise formstabil ist.

18. Außenrückblickspiegel nach Anspruch 17,
**dadurch gekennzeichnet, daß** das Anbauelement (19) Dichtelemente aufweist.

19. Außenrückblickspiegel nach einem der Ansprüche 1 bis 18,
**dadurch gekennzeichnet, daß** der Außenrückblickspiegel ein Einachsspiegel ist.

20. Außenrückblickspiegel nach einem der Ansprüche 1 bis 18,
**dadurch gekennzeichnet, daß** der Außenrückblickspiegel ein Zweiachsspiegel ist.

## Claims

1. Outside rearview mirror for vehicles, preferably for motor vehicles, having a mirror base (2) and a mirror head (1) and at least one luminous means unit (6) which has at least one luminous means (25) and a housing (20) which accommodates the luminous means (25) and is located in a holding area of the mirror base (2),
**characterized in that** the holding area (5) is a recess in the mirror base (2), into which the housing (20) projects, and **in that** the luminous means unit (6) is part of a fitting element (19) which is physically separate from the outside rearview mirror and has a wall (26) located between the mirror base (2) and the bodywork (3) of the vehicle.

2. Outside rearview mirror according to Claim 1,
**characterized in that** the housing (20) and the wall (26) of the fitting element (19) are formed integrally with one another.

3. Outside rearview mirror according to Claim 1 or 2,
**characterized in that** the fitting element (19) has at least one interlocking part (28, 35).

4. outside rearview mirror according to Claim 3,
**characterized in that** the interlocking part. (28) is formed by latching hooks.

5. Outside rearview mirror according to Claim 4,
**characterized in that** the interlocking part (28) can be latched into the bodywork (3) of the vehicle.

6. Outside rearview mirror according to one of Claims 3 to 5,
**characterized in that** the interlocking part (28, 35) projects at an angle from the wall (26) of the fitting element (19).

7. Outside rearview mirror according to Claim 3 or 6,
**characterized in that** the interlocking part (35) is an angled part of the wall (26) of the fitting element (19).

8. Outside rearview mirror according to one of Claims 1 to 7,
**characterized in that** the holding area (5) is formed by a moulded section of the mirror base (2).

9. Outside rearview mirror according to one of Claims 1 to 8,
**characterized in that** the holding area (5) is located on the underside (4) of the mirror base (2).

10. Outside rearview mirror according to one of Claims 1 to 8,
**characterized in that** the holding area (5) is located on the upwards-pointing front and/or rear edge (32, 34) of the mirror base (2).

11. Outside rearview mirror according to one of Claims 1 to 10,
**characterized in that** the housing (20) of the luminous means unit (6) bears against the wall of the holding area (5).

12. Outside rearview mirror according to one of Claims 1 to 11,
**characterized in that** the housing (20) is closed by a light diffusion lens (24).

13. Outside rearview mirror according to one of Claims 1 to 12,
**characterized in that** the luminous means unit (6) is provided as a background lamp.

14. Outside rearview mirror according to one of Claims 1 to 12,
**characterized in that** the luminous means unit (6) is in the form of a repeatedly flashing indicator lamp.

15. Outside rearview mirror according to one of Claims 1 to 14,
**characterized in that** the fitting element (19) has aperture openings (16, 17) for attachment parts (13 to 15) of the mirror base (2), optionally also for cables.

16. Outside rearview mirror according to one of Claims 1 to 15,
**characterized in that** the fitting element (19) is dimensionally stable.

17. Outside rearview mirror according to one of Claims 1 to 15,
**characterized in that** the fitting element (19) is partially dimensionally stable.

18. Outside rearview mirror according to Claim 17,
**characterized in that** the fitting element (19) has sealing elements.

19. Outside rearview mirror according to one of Claims 1 to 18,
**characterized in that** the outside rearview mirror is a single-axis mirror.

20. Outside rearview mirror according to one of Claims 1 to 18,
**characterized in that** the outside rearview mirror is a two-axis mirror.

## Revendications

1. Rétroviseur extérieur pour véhicules, de préférence pour véhicules automobiles, comportant un pied de rétroviseur (2) et une tête de rétroviseur (1) ainsi qu'au moins une unité à moyen d'éclairage (6) qui présente au moins un moyen d'éclairage (25) et un boîtier (20) dans lequel est logé le moyen d'éclairage (25) et qui est situé dans une chambre de réception du pied de rétroviseur (2),
**caractérisé en ce que** la chambre de réception (5) est un renfoncement dans le pied de rétroviseur (2), dans lequel fait saillie le boîtier (20), et **en ce que** l'unité à moyen d'éclairage (6) fait partie d'un élément rapporté (19) qui est corporellement séparé du rétroviseur extérieur et qui présente une paroi (26) se trouvant entre le pied de rétroviseur (2) et la carrosserie (3) du véhicule.

2. Rétroviseur extérieur selon la revendication 1, **caractérisé en ce que** le boîtier (20) et la paroi (26) de l'élément rapporté (19) sont réalisés d'un seul tenant l'un avec l'autre.

3. Rétroviseur extérieur selon la revendication 1 ou 2, **caractérisé en ce que** l'élément rapporté (19) présente au moins une partie à coopération de formes (28, 35).

4. Rétroviseur extérieur selon la revendication 3, **caractérisé en ce que** la partie à coopération de formes (28) est formée par des crochets d'enclenchement.

5. Rétroviseur extérieur selon la revendication 4, **caractérisé en ce que** la partie à coopération de formes (28) peut être enclenchée dans la carrosserie (3) du véhicule.

6. Rétroviseur extérieur selon l'une des revendications 3 à 5, **caractérisé en ce que** la partie à coopération de formes (28, 35) fait saillie transversalement depuis la paroi (26) de l'élément rapporté (19).

7. Rétroviseur extérieur selon la revendication 3 ou 6, **caractérisé en ce que** la partie à coopération de formes (35) est une partie coudée de la paroi (26) de l'élément rapporté (19).

8. Rétroviseur extérieur selon l'une des revendications 1 à 7, **caractérisé en ce que** la chambre de réception (5) est formée par un tronçon conformé du pied de rétroviseur (2).

9. Rétroviseur extérieur selon l'une des revendications 1 à 8, **caractérisé en ce que** la chambre de réception (5) est prévue sur la face inférieure (4) du pied de rétroviseur (2).

10. Rétroviseur extérieur selon l'une des revendications 1 à 8,
**caractérisé en ce que** la chambre de réception (5) est prévue sur le bord (32, 34) antérieur et/ou postérieur, orienté vers le haut, du pied de rétroviseur (2).

11. Rétroviseur extérieur selon l'une des revendications 1 à 10,
**caractérisé en ce que** le boîtier (20) de l'unité à moyen d'éclairage (6) est en appui sur la paroi de la chambre de réception (5).

12. Rétroviseur extérieur selon l'une des revendications 1 à 11,
**caractérisé en ce que** le boîtier (20) est fermé par une plaque d'éclairement (24).

13. Rétroviseur extérieur selon l'une des revendications 1 à 12,
**caractérisé en ce que** l'unité à moyen d'éclairage (6) est prévue en tant que feu d'environnement.

14. Rétroviseur extérieur selon l'une des revendications 1 à 12,
**caractérisé en ce que** l'unité à moyen d'éclairage (6) est réalisée sous la forme de feu clignotant répétiteur.

15. Rétroviseur extérieur selon l'une des revendications 1 à 14,
**caractérisé en ce que** l'élément rapporté (19) présente des ouvertures de passage (16, 17) pour des parties de fixation (13 à 15) du pied de rétroviseur (2), le cas échéant aussi pour des câbles.

16. Rétroviseur extérieur selon l'une des revendications 1 à 15,
**caractérisé en ce que** l'élément rapporté (19) est indéformable.

17. Rétroviseur extérieur selon l'une des revendications 1 à 15,
**caractérisé en ce que** l'élément rapporté (19) est partiellement indéformable.

18. Rétroviseur extérieur selon la revendication 17, **caractérisé en ce que** l'élément rapporté (19) présente des éléments d'étanchéité.

19. Rétroviseur extérieur selon l'une des revendications 1 à 18,
**caractérisé en ce que** le rétroviseur extérieur est un rétroviseur monoaxial.

20. Rétroviseur extérieur selon l'une des revendications 1 à 18,
**caractérisé en ce que** le rétroviseur extérieur est un rétroviseur biaxial.
